# EUROPÄISCHE PATENTSCHRIFT

(11) **EP 2 118 541 B1**
(45) Veröffentlichungstag und Bekanntmachung des Hinweises auf die Patenterteilung: **01.08.2012**
(21) Anmeldenummer: 08707799.6
(22) Anmeldetag: 25.02.2008
(51) Int. Cl.: F16K 17/30

(54) **GASSTRÖMUNGSWÄCHTER**
GAS FLOW MONITOR
CONTROLEUR D'ECOULEMENT GAZEUX

(30) Priorität: 02.03.2007 DE 102007010227
(43) Veröffentlichungstag der Anmeldung: 18.11.2009
(73) Patentinhaber: Mertik Maxitrol GmbH & Co. KG, 06502 Thale (DE)
(72) Erfinder: VOGT, Thomas, 06507 Bad Suderode (DE); FISCHER, Norbert, 39120 Magdeburg (DE)
(74) Vertreter: Albrecht, Günter
(86) Internationale Anmeldenummer: PCT/EP2008/001458
(87) Internationale Veröffentlichungsnummer: WO 2008/107086

(56) Entgegenhaltungen:
- EP-A- 1 605 193
- DE-A1- 10 202 067
- DE-A1- 10 340 679
- DE-A1-102004 006 664

## Beschreibung

### Technisches Gebiet

Die Erfindung betrifft einen Gasströmungswächter zum automatischen Absperren von nachgeordneten Gasleitungen bei Überschreitung eines definierten maximalen Durchflusses nach dem Oberbegriff des ersten Patentanspruches.

### Stand der Technik

Solche Gasströmungswächter gibt es in einer Vielzahl von Ausführungen. Sie werden in Rohrleitungen, wie zum Beispiel vor Gasarmaturen, Gasgeräten usw., eingesetzt und dienen dazu, bei einer Erhöhung des Gasverbrauches über einen vorgegebenen Wert, wie es beispielsweise bei Rohrleitungsbrüchen oder unzulässig hohen Leckagen der Fall ist, die Gaszufuhr in die nachfolgende Gasleitung zu unterbrechen. Um den gewünschten Schließ- bzw. Nenndurchfluss einzustellen, wird bei diesen Gasströmungswächtern eine Feder durch veränderbare Anschläge so vorgespannt, dass durch die resultierende Kraft aus der Vorspannkraft der Feder und der Strömungskraft des Gasstromes der Gasströmungswächter seine Geschlossen- bzw. seine Offenstellung einnimmt.

Ein derartiger Gasströmungswächter ist in der DE 100 43 811 A1 beschrieben. Er besteht aus einem gasdichten Gehäuse, das in eine vom Gas durchströmte Rohrleitung eingesetzt wird. Im Inneren des Gehäuses ist ein Ventilsitz für einen beweglichen Schließkörper ausgebildet. Der Schließkörper ist auf einem axial beweglichen Stift befestigt, der in einer Eingangsführung und einer Ausgangsführung gelagert wird. Durch eine Schließfeder, die sich einerseits an einem durch ein mittig in die Ausgangsführung eingeschraubtes Justierelement und andererseits an dem Schließkörper abstützt, wird dieser in Offenstellung gehalten. Zusätzlich ist auf der Eingangsführung ein Distanzstück angeordnet, das in Offenstellung des Gasströmungswächters einen ebenfalls justierbaren Anschlag für den Schließkörper bildet.

Eine andere Ausführung eines Strömungswächters ist aus der DE 201 16 899 U1 bekannt. Auch dieser Strömungswächter besteht aus einem im Inneren einen Ventilsitz aufweisenden Gehäuse und einem in dem Gehäuse angeordneten Schließkörper, der im Normalzustand durch eine Rückhaltekraft in seiner Offenstellung gehalten wird. An dem Schließkörper ist ein Führungsstift befestigt, der sich ausgehend von dem Schließkörper in der dem Ventilsitz gegenüberliegenden Richtung durch eine in einem Stützelement ausgebildete Öffnung erstreckt und dabei in dieser geführt wird. An seinem dem Schließkörper gegenüberliegendem Ende weist der Führungsstift Ringnuten auf. In einer der Ringnuten ist ein Einstellring verrastet. Zwischen dem Einstellring und dem Stützelement ist eine Feder angeordnet, die auf den Einstellring eine Druckkraft ausübt. Diese Druckkraft bildet eine Rückhaltekraft, die den Schließkörper in der Offenstellung hält. Durch Verrasten des Einstellringes in einer anderen Ringnut kann die von der Feder ausgeübte Druckkraft und damit die Rückhaltekraft verändert werden.

Einen ähnlichen Aufbau besitzt ein in der DE 203 17 261 U1 und der DE 103 52 372 A1 identisch beschriebenes Sicherheitsventil. In einem Gehäuse ist ein Ventilsitz für einen Schließkörper angeordnet. In Strömungsrichtung vor dem Ventilsitz ist im Gehäuse eine Haltebrücke eingeschraubt. Der Schließkörper weist einen Führungsbolzen auf, der in der Haltebrücke axial verschiebbar gelagert ist. Von einer den Führungsbolzen umgebenden Druckfeder, die einerseits an einer mit der Haltebrücke verbundenen Führungshülse und andererseits an einer Anschlagfläche des Führungsbolzens abgestützt ist, wird die Rückhaltekraft aufgebracht, die durch die relative Lage der Führungshülse gegenüber der Haltebrücke bestimmt wird.

Eine weitere aus der JP 3 - 33572 A bekannte Ausführung besitzt einen ähnlichen Aufbau wie das vorhergehend beschriebene Sicherheitsventil. Ein Unterschied besteht nur darin, dass das Gehäuse zweigeteilt ist, um beidseitig des Ventilkörpers einen Führungsbereich für den Führungsbolzen zu erhalten.

In der DE 20 2005 001 685 U1 wird ein Adapterelement beansprucht, das mit einem in ihm befindlichen Strömungswächter in einen Rohrabschnitt eingesetzt werden kann. Dadurch soll es ermöglicht werden, dass ein bestimmter Strömungswächter durch die Verwendung unterschiedlicher Adapterelemente in einer Vielzahl verschiedener Leitungen eingesetzt werden kann.

Bei allen diesen genannten Lösungen ist es von Nachteil, dass die Einstellung eines definierten Wertebereiches des Schließ- bzw. Nenndurchflusses einen Eingriff in die Lage der Funktionselemente erfordert und somit vorrangig durch den Hersteller solcher Gasströmungswächter im Rahmen der Fertigung erfolgt. Desweiteren ist die Herstellung verhältnismäßig aufwändig und somit kostenintensiv.

### Darstellung der Erfindung

Der Erfindung liegt das Problem zugrunde, einen Gasströmungswächter der genannten Art zu entwickeln, bei dem die Einstellung eines definierten Wertebereiches des Schließ- bzw. Nenndurchflusses ohne einen Eingriff in die Lage der Funktionselemente erfolgen kann. Desweiteren soll es ermöglicht werden, dass die Einstellung bzw. eine Veränderung des eingestellten Schließ- bzw. Nenndurchflusses auch noch außerhalb der Fertigungsstätte, vorteilhafterweise erst zum Zeitpunkt der Installation, erfolgen kann. Erfindungsgemäß wird das Problem dadurch gelöst, dass das Gehäuse des Gasströmungswächters eingangsseitig mit einem rohrförmigen Einsatz verbunden ist, durch dessen Innenkontur das Strömungsprofil bis zum Ventilsitz bestimmt ist.

Damit wurde eine Lösung gefunden, mit der die weiter oben genannten Nachteile des Standes der Technik beseitigt wurden. Mit Hilfe der erfindungsgemäßen Lösung wird es ermöglicht den ansonsten bereits fertig montierten Gasströmungswächter mit dem in Abhängigkeit für den gewünschten Schließ- bzw. Nenndurchfluss die notwendige Innenkontur aufweisenden Einsatz zu komplettieren. Dabei sind keine nachträglichen Änderungen an den Funktionselementen notwendig. Desweiteren ist es in einfacher Weise möglich durch eine farbliche Kennzeichnung der unterschiedlichen Einsätze die jeweilige Ausführung sofort erkennbar zu machen.

Weitere vorteilhafte Ausgestaltungen der Erfindung gehen aus den anderen Patentansprüchen hervor. So erweist es sich als besonders günstig, wenn die Verbindung zwischen dem Gehäuse und dem Einsatz formschlüssig, beispielsweise über ein Rastelement, ausgeführt ist, um Veränderungen, die bei einer kraftschlüssigen Verbindung im Rahmen von über einen längeren Zeitraum auftretenden Alterungserscheinungen, zum Beispiel Materialermüdungen, auftreten können, auszuschließen.

Um ein leichtes Verbinden des Gehäuses mit dem Einsatz zu ermöglichen, sind günstigerweise die äußere Mantelfläche des Einsatzes und die innere Mantelfläche des Gehäuses so ausgeführt, dass ein Kontakt mit einer Kontur des Rastelementes erst unmittelbar vor dem Verrasten des Rastelementes erfolgt.

Damit bei sich nachträglich ergebenden Veränderungen des gewünschten Wertes des Schließ- bzw. Nenndurchflusses eine einfache Korrektur vorgenommen werden kann, erweist es sich als besonders vorteilhaft, wenn die Verbindung, beispielsweise die Rastung, zwischen dem Einsatz und dem Gehäuse so gestaltet ist, dass der Einsatz, beispielsweise mit entsprechender Krafteinwirkung, Verdrehung oder ähnliches, wieder gelöst werden kann.

Desweiteren erweist sich eine Ausführung als fertigungstechnisch vorteilhaft, bei der das Gehäuse einstückig mit der eine Lagerstelle für den längsbeweglichen, den Schließkörper führenden Stift bildenden Hülse ausgeführt ist.

Eine besonders vorteilhafte Ausführung eines Gasströmungswächters mit zusätzlicher verbesserter Schwingungsfestigkeit ist Gegenstand eines weiteren Schutzanspruches. Bei dieser Variante ist der stromab aus der Hülse herausragende Teil des Stiftes in einer fest mit der Hülse verbundenen Kappe eingekapselt, wobei zwischen einem an dem Stift befindlichen Bund und der Innenseite der Kappe ein definierter Ringspalt vorhanden ist, so dass eine Drosselstelle entsteht.

### Ausführungsbeispiel

Der erfindungsgemäße Gasströmungswächter wird nachstehend an einem Ausführungsbeispiel näher beschrieben. Es zeigen:
- Fig. 1: einen erfindungsgemäßen Gasströmungswächter im Halbschnitt in Offenstellung
- Fig. 2: einen erfindungsgemäßen Gasströmungswächter mit verbesserter Schwingungsfestigkeit im Halbschnitt in Geschlossenstellung

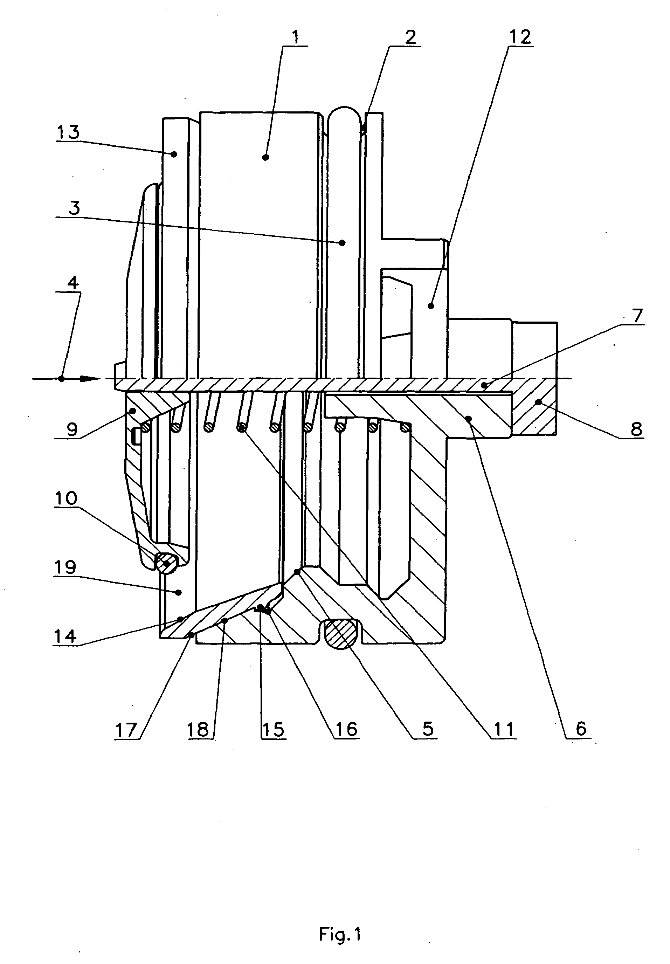

Das in der Figur 1 dargestellte Ausführungsbeispiel eines erfindungsgemäßen Gasströmungswächters besitzt ein rohrförmiges Gehäuse 1, das in eine nicht dargestellte Gasleitung eingedrückt werden kann. Um die notwendige Dichtheit zwischen der Gasleitung und dem Gehäuse 1 zu garantieren, weist das Gehäuse 1 eine umlaufende Nut 2 auf, in der sich ein O-Ring 3 befindet. Es versteht sich von selbst, dass auch ein anderer Anschluss möglich ist.

In der durch einen Richtungspfeil 4 gezeigten Richtung kann ein Gas durch das Gehäuse 1 hindurch strömen. In etwa mittig besitzt das Gehäuse 1 eine Einschnürung, die auf ihrer dem Eingang zugewandten Seite als Ventilsitz 5 ausgebildet ist. Am ausgangsseitigen Ende des Gehäuses 1 befindet sich eine axial angeordnete Hülse 6, die über radiale Stege 12 einstückig mit dem Gehäuse 1 verbunden ist. In der Hülse 6 wird ein Stift 7 längsbeweglich geführt, der an seinem dem Gehäuse abgewandten Ende einen Bund 8 aufweist. Auf seinem durch die Einschnürung des Gehäuses 1 hindurchragenden Ende ist ein Schließkörper 9 beispielsweise mittels Presspassung befestigt. Zum Erzielen der gewünschten Dichtheit bei der Geschlossenstellung des Gasströmungswächters besitzt der Schließkörper 9 eine ringförmige Aufnahme für einen als elastisches Abdichtelement dienenden O-Ring 10.

Auf der Hülse 6 stützt sich eine Schließfeder 11 ab, die mit ihrem anderen Ende den Schließkörper 9 in seiner Offenstellung hält. Dabei wird die Offenstellung durch den Anschlag des Bundes 8 an der Hülse 6 festgelegt.

Um den Schließ- bzw. Nenndurchfluss an die Art, Natur und Menge der Verbraucher exakt anzupassen, ist im Eingangsbereich des Gehäuses 1 ein rohrförmiger Einsatz 13 befestigt, der mit seiner Innenkontur 14 das Strömungsprofil bis zum Ventilsitz 5 bestimmt. Mit der Innenkontur 14 wird in Verbindung mit der Geometrie des Schließkörpers 9 der Querschnitt des entstehenden Ringspaltes 19 definiert, dessen Größe die Strömungsgeschwindigkeit des Gases und damit den auf den Schließkörper 9 wirkenden Strömungsdruck beeinflusst. Durch diese Beeinflussung der Kräfteverhältnisse wird der Arbeitspunkt des Gasströmungswächters je nach der vorhandenen Innenkontur 14 des ausgewählten Einsatzes 13 um einen mehr oder weniger großen Betrag verschoben, wodurch der Schließ- bzw. Nenndurchfluss verändert wird.

Zur Kombination mit dem Gehäuse 1 kommt in diesem Ausführungsbeispiel eine formschlüssige Verbindung zur Anwendung. Dazu besitzt der günstigerweise aus einem Kunststoff gefertigte Einsatz 13 auf seiner äußeren Mantelfläche 17 eine umlaufende Wulst 15, die sich in einer in der inneren Mantelfläche 18 des Gehäuses 1 eingebrachten umlaufenden Rastnut 16 befindet und mit dieser gemeinsam ein Rastelement bildet. Es versteht sich, dass das Rastelement auch anderweitig ausgeführt werden kann.

Um die Montage zu vereinfachen sind die äußere Mantelfläche 17 des Einsatzes 13 und die innere Mantelfläche 18 des Gehäuses 1 konisch ausgeführt, dergestalt, dass ein Kontakt mit einer Kontur des Rastelementes erst unmittelbar vor dem Verrasten desselben erfolgt. Je nachdem, ob ein Auswechseln des Einsatzes 13 in Betracht gezogen werden soll oder nicht, ist es desweiteren möglich die Gestaltung des Rastelementes in fachüblicher Weise so vorzunehmen, dass die Verbindung nach erfolgter Verrastung durch eine entsprechende Ausbildung von Wulst 15 und/oder Rastnut 16 lösbar oder unlösbar ist.

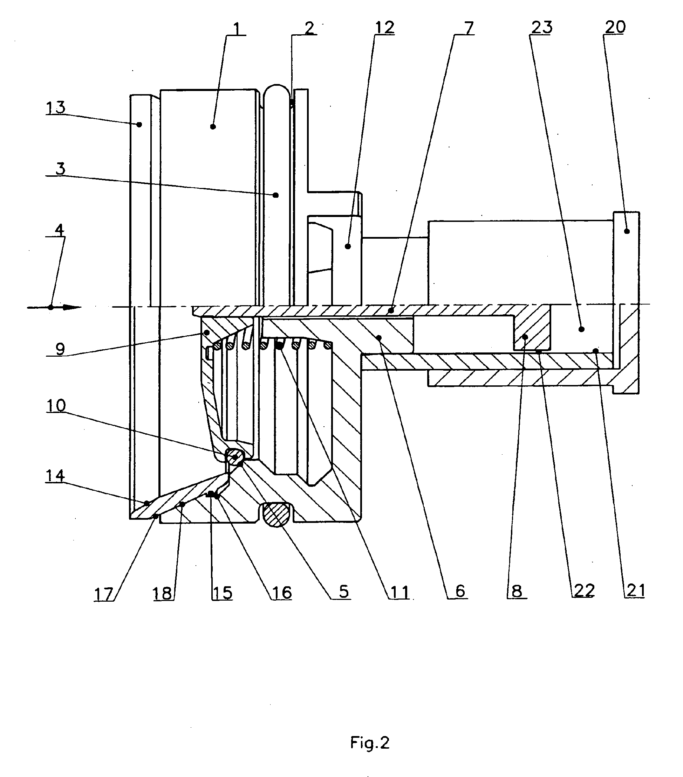

Die Wirkungsweise des in diesem ersten Ausführungsbeispiel beschriebenen Gasströmungswächters ist wie folgt:
Der mit einem Einsatz 13 mit gewünschter Innenkontur 14 versehene Gasströmungswächter ist so in einer Gasleitung eingebaut, dass die durch den Richtungspfeil 4 angegebene Strömungsrichtung des Gases eingehalten wird. Im Normalfall befindet er sich dann in der in Figur 1 dargestellten Stellung. Dabei wird der Schließkörper 9 unter der Einwirkung der gegen die Strömung wirkenden Schließfeder 11 in Offenstellung gehalten. Tritt auf Grund einer Beschädigung einer nachgeordneten Gasleitung oder eines nachgeordneten schadhaften Verbrauchers ein über dem Schließ- bzw. Nenndurchfluss liegender Gasverbrauch auf, so wird durch die Erhöhung der Strömung im Ringspalt 19 auch der Strömungsdruck auf den Schließkörper 9 erhöht, die Kraft der Schließfeder 11 überwunden, und der Schließkörper 9 nimmt die Geschlossenstellung ein, wie sie in Figur 2 gezeigt ist. Die Gaszufuhr ist unterbrochen.

Zusätzlich ist in der Figur 2 eine veränderte Ausführung eines Gasströmungswächters gezeigt. Dieser Gasströmungswächter ist gegenüber Schwingungen unempfindlicher. Das ist notwendig, wenn in der Gasleitung kurzfristige Schwankungen des Gasdurchflusses über den Schließ- bzw. Nenndurchfluss, beispielsweise durch schlagartig öffnende Gasarmaturen, auftreten können.

Neben dem ansonsten gleichen Aufbau wie der in Figur 1 in Offenstellung dargestellte Gasströmungswächter, weist er eine auf der Hülse 6 aufgepresste Kappe 20 auf, die den stromab aus der Hülse 6 herausragende Teil des Stiftes 7 einkapselt. Durch den Bund 8 des Stiftes 7 wird dabei der durch die Innenseite 21 der Kappe 20 gebildete Hohlraum in zwei Bereiche unterteilt, die über einen Ringspalt 22 miteinander verbunden sind.

Tritt nun bei Offenstellung des Gasströmungswächters eine kurzfristige Durchflusserhöhung, beispielsweise durch das schlagartige Öffnen eines Magnetventils, auf, die über dem Schließ- bzw. Nenndurchfluss liegt, würde der in Figur 1 dargestellte Gasströmungswächter ebenfalls schlagartig schließen. Eine Störung im nachgeordneten Gasnetz wäre die Folge. Demgegenüber muss bei dem in Figur 2 gezeigten Gasströmungswächter bei einer Bewegung des Schließkörpers 9 das Gas erst über den eine Drosselstelle bildenden Ringspalt 22 von einem Bereich in den anderen strömen. Es tritt eine Dämpfung ein, die das schlagartige Schließen des Gasströmungswächters verhindert.

### Aufstellung der Bezugszeichen

- 1: Gehäuse
- 2: Nut
- 3: O - Ring
- 4: Richtungspfeil
- 5: Ventilsitz
- 6: Hülse
- 7: Stift
- 8: Bund
- 9: Schließkörper
- 10: O - Ring
- 11: Schließfeder
- 12: Steg
- 13: Einsatz
- 14: Innenkontur
- 15: Wulst
- 16: Rastnut
- 17: Mantelfläche
- 18: Mantelfläche
- 19: Ringspalt
- 20: Kappe
- 21: Innenseite
- 22: Ringspalt
- 23: Hohlraum

## Patentansprüche

1. Gasströmungswächter zum automatischen Absperren von nachgeordneten Gasleitungen bei Überschreitung eines definierten maximalen Durchflusses mit einem gasdichten Gehäuse (1), das im Inneren einen Ventilsitz (5) für einen im Gehäuse (1) beweglichen Schließkörper (9) aufweist, mit einem den Schließkörper (9) führenden Stift (7), der wiederum in einer mit dem Gehäuse (1) verbundenen Hülse (6) längsbeweglich geführt ist, und mit einer Schließfeder (11), die sich einerseits am Gehäuse (1) und andererseits an dem Schließkörper (9) abstützt, der durch die Federkraft gegen die Durchströmrichtung in Offenstellung gehalten ist, **dadurch gekennzeichnet, dass** der Gasströmungswächter einen rohrförmigen Einsatz (13) aufweist, wobei das Gehäuse (1) eingangsseitig mit einem rohrförmigen Einsatz (13) verbunden ist, durch dessen Innenkontur (14) das Strömungsprofil bis zum Ventilsitz (5) derart bestimmt ist, dass der Arbeitspunkt, d.h. der Schließ- bzw. Nenndurchfluss des Gasströmungswächters in Abhängigkeit von der Ausführung der Innenkontur (14) des ausgewählten Einsatzes (13) festgelegt wird.

2. Gasströmungswächter nach Patentanspruch 1, **dadurch gekennzeichnet, dass** die Verbindung zwischen Gehäuse (1) und Einsatz (13) formschlüssig ausgeführt ist.

3. Gasströmungswächter nach Patentanspruch 2, **dadurch gekennzeichnet, dass** der Einsatz (13) auf seiner äußeren Mantelfläche (17) und das Gehäuse (1) auf seiner inneren Mantelfläche (18) einander zugeordnete und Rastelemente (15;16) bildende Konturen aufweisen.

4. Gasströmungswächter nach Patentanspruch 3, **dadurch gekennzeichnet, dass** die äußere Mantelfläche (17) des Einsatzes (13) und die innere Mantelfläche (18) des Gehäuses (1) so ausgeführt sind, dass ein Kontakt mit einer Kontur eines Rastelementes (15;16) erst unmittelbar vor dem Verrasten des Rastelements (15;16) erfolgt.

5. Gasströmungswächter nach einem der vorhergehenden Patentansprüche, **dadurch gekennzeichnet, dass** der Einsatz (13) lösbar mit dem Gehäuse (1) verbunden ist.

6. Gasströmungswächter nach Patentanspruch 1, **dadurch gekennzeichnet, dass** das Gehäuse (1) einstückig mit der Hülse (6) ausgeführt ist.

7. Gasströmungswächter nach Patentanspruch 1, **dadurch gekennzeichnet, dass** der stromab aus der Hülse (6) herausragende Teil des Stiftes (7) in einer fest mit der Hülse (6) verbundenen Kappe (20) eingekapselt ist, wobei zwischen einem an dem Stift (7) befindlichen Bund (8) und der Innenseite (21) der Kappe (20) ein definierter Ringspalt (22) vorhanden ist.

## Claims

1. Gas flow monitor for automatically shutting off downstream gas conduits if a defined maximum flow is exceeded with a gas-tight housing (1) that has a valve seat (5) in its interior for a closing body (9) that is movable in the housing (1), with a pin (7) which guides the closing body (9) and is in turn guided in a longitudinally movable manner in a sleeve (6) connected to the housing (1), and with a closing spring (11) which is supported on one side on the housing (1) and on the other side on the closing body (9), which is held against the flow direction in an open position by the spring force, **characterised in that** the gas flow monitor has a tube-shaped insert (13), wherein the housing (1) is connected on the inlet side to the tube-shaped insert (13), the inner contour (14) of which determines the flow profile up to the valve seat (5) in such a manner that the working point, i.e. the closed or nominal flow rate of the gas flow monitor is determined dependent on the construction of the inner contour (14) of the insert (13) selected.

2. Gas flow monitor according to claim 1, **characterised in that** the connection between housing (1) and insert (13) is positively locked.

3. Gas flow monitor according to claim 2, **characterised in that** the insert (13) and the housing (1) have respectively on their outer surface (17) and their inner surface (18) matching contours forming stop elements (15; 16).

4. Gas flow monitor according to claim 3, **characterised in that** the outer surface (17) of the insert (13) and the inner surface (18) of the housing (1) have been constructed in such a manner that a contact with a contour of a stop element (15; 16) is made only immediately before the engagement of the stop element (15; 16).

5. Gas flow monitor according to one of the previous claims, **characterised in that** the insert (13) is detachably connected to the housing (1).

6. Gas flow monitor according to claim 1, **characterised in that** the housing (1) is embodied as a single piece with the sleeve (6).

7. Gas flow monitor according to claim 1, **characterised in that** the part of the pin (7) protruding from the sleeve (6) downstream is encapsulated in a cap (20) permanently connected to the sleeve (6), with a defined annular space (22) between a collar (8) arranged on the pin (7) and the inner side (21) of the cap (20).

## Revendications

1. Dispositif de surveillance de l'écoulement d'un gaz pour la fermeture automatique de conduites de gaz montées en aval en cas de dépassement d'un débit maximal défini, ayant un boîtier (1) étanche au gaz qui comprend à l'intérieur un siège de soupape (5) pour un corps de fermeture (9) mobile à l'intérieur du boîtier (1), et ayant une tige (7) guidant le corps de fermeture (9), la tige (7) étant guidée en déplacement longitudinal dans une douille (6) reliée au boîtier (1), et ayant un ressort de fermeture (11) qui s'appuie d'un côté contre le boîtier (1) et d'autre côté contre le corps de fermeture (9) qui est maintenu dans une position d'ouverture contre le sens de l'écoulement par la force du ressort, **caractérisé en ce que** le dispositif de surveillance de l'écoulement d'un gaz comprend un insert tubulaire (13), le boîtier (1) étant relié du côté de l'entrée à l'insert tubulaire (13) dont le contour intérieur (14) détermine le profil d'écoulement jusqu'au siège de soupape (5) de telle manière que le point de fonctionnement - c'est-à-dire le débit de fermeture ou le débit nominal - du dispositif de surveillance de l'écoulement d'un gaz soit défini en fonction de la réalisation du contour interne (14) de l'insert (13) choisi.

2. Dispositif de surveillance de l'écoulement d'un gaz selon la revendication 1, **caractérisé en ce que** la liaison entre le boîtier (1) et l'insert (13) est réalisée par engagement positif.

3. Dispositif de surveillance de l'écoulement d'un gaz selon la revendication 2, **caractérisé en ce que** la surface périphérique extérieure (17) de l'insert (13) et la surface périphérique intérieure (18) du boîtier (1) comprennent des contours associés entre eux qui forment des éléments d'enclenchement (15 ; 16).

4. Dispositif de surveillance de l'écoulement d'un gaz selon la revendication 3, **caractérisé en ce que** la surface périphérique extérieure (17) de l'insert (13) et la surface périphérique intérieure (18) du boîtier (1) sont réalisées de telle manière qu'un contact avec un contour d'un élément d'enclenchement (15 ; 16) n'ait lieu qu'immédiatement avant l'encliquetage de l'élément d'enclenchement (15 ; 16).

5. Dispositif de surveillance de l'écoulement d'un gaz selon l'une des revendications précédentes, **caractérisé en ce que** l'insert (13) est relié de manière amovible au boîtier (1).

6. Dispositif de surveillance de l'écoulement d'un gaz selon la revendication 1, **caractérisé en ce que** le boîtier (1) est réalisé en une seule pièce avec la douille (6).

7. Dispositif de surveillance de l'écoulement d'un gaz selon la revendication 1, **caractérisé en ce que** la partie de la tige (7) qui, en aval, fait saillie de la douille (6) est encapsulée dans un capot (20) relié fixement à la douille (6), un espace annulaire (22) défini étant présent entre une collerette (8) se trouvant sur la tige (7) et la face interne (21) du capot (20).
